# EUROPÄISCHE PATENTSCHRIFT

(11) **EP 1 081 263 B1**
(45) Veröffentlichungstag und Bekanntmachung des Hinweises auf die Patenterteilung: **02.07.2008**
(21) Anmeldenummer: 00117626.2
(22) Anmeldetag: 16.08.2000
(51) Int. Cl.: D04H 13/00

(54) **Verfahren und Vorrichtung zur Stabilisation einer Florware, wie Florteppich mit einem verfestigenden Rücken und Florware**
Method and apparatus for stabilising a pile fabric such as carpetting with a reinforcing backing and pile fabric
Procédé et dispositif pour la stabilisation d'un tissu à poils comme un tapis à poils avec une couche de consolidation et tissu à poils

(30) Priorität: 01.09.1999 DE 19941613; 24.09.1999 DE 19945988
(43) Veröffentlichungstag der Anmeldung: 07.03.2001
(73) Patentinhaber: Fleissner GmbH, 63329 Egelsbach (DE)
(72) Erfinder: Fleissner, Gerold, 6300 Zug (CH)

(56) Entgegenhaltungen:
- EP-A- 0 538 625
- US-A- 5 458 944
- US-A- 5 470 648

## Beschreibung

Die Rückseite z. B. eines Tuftingteppichs muß primär für den festen Halt der Florfasern sorgen, da beim Tuften die Florfasern in den Primärträger eingebracht, aber leicht wieder herausgezogen werden können. Weiterhin muß auch der Teppichrücken für ein größeres Volumen, für einen weichen Tritt und für eine gute Verlegemöglichkeit mit einer Dimensionsstabilität sorgen. Es ist bekannt, diese Bedingungen zunächst mit einem Vorstrich aus Latex zu bewirken, der auszuhärten hat. Als Zweitschicht könnte dann ein Jutegewebe aufkaschiert werden. Die Zweitschicht kann auch aus einem Schaum bestehen, der zu vulkanisieren -ist. Diese Herstellungsverfahren sind -sehr kostspielig und auch das so hergestellte Produkt bei einer späteren Entsorgung umweltbelastend.

Der Erfindung liegt die Aufgabe zugrunde, zunächst ein Verfahren zu finden, mit dem die umweltbelastenden Bindemittel, der Schaum und die damit erforderlichen Chemikalien vermieden werden. Gleichzeitig sollte das Produkt: Florware, wie insbesondere eine Teppichherstellungsanlage billiger werden und dennoch die Florware alle erforderlichen Qualitäten aufweisen.

Zur Lösung dieser Aufgabe ist vorgesehen, daß an der Rückseite des die Florfasern haltenden Primärträgers ein Nonwoven mittels hydrodynamischer Wasservernadelung befestigt wird. Es hat sich gezeigt, daß mit der Wasservernadelung die Fasern des stabilisierenden Vlieses nur so weit in den Rücken des Primärträgers und in die dort gehaltenen Florfasern geschossen werden können, daß weder auf der Floraußenseite, noch an den Wurzeln des Flors der Bahnware Bestandteile des jetzt an der Rückenseite stabilisierend gehaltenen Nonwoven sichtbar sind. Das Nonwoven ist nur mit den auf der Rückenseite sichtbaren, dort umgelenkten Florfasern und mit der Rückenseite des Primärträgers vernadelt, womit die Florfasern im Rücken stabilisiert sind.

Es ist zwar richtig, daß in der Praxis ein stabilerer, ggf. auch ein voluminöserer Teppich gewünscht wird als nur einer, der ein leichtes Vlies auf der Rückseite aufweist. Es ist deshalb in Ausgestaltung des Verfahrens vorteilhaft, wenn zunächst ein Komposit aus einem leichten Nonwoven, einem grobgeflochteten, formstabilen Stabilitätsflächenelement und ggf. wiederum einem leichten Nonwoven zusammengelegt und auf den unverfestigten Teppichrücken verlagert und dann zur Verbindung mit dem Teppichrücken mit der hydrodynamischen Wasservernadelung in einem Arbeitsgang verbunden wird. Jetzt hat der Teppich nicht nur einen verfestigten, im Rücken dauerhaft gehaltenen Flor, sondern auch das gewünschte Volumen und mit dem Stabilitätsflächenelement auch die geforderte Dimensionsstabilität. Eine solche stabilisierende Rückenschicht kann bis zu 600 gr/m² schwer sein.

Mit dem Verfahren nach der Erfindung kann jetzt preiswerter ein Florteppich mit den gewohnten Qualitätseigenschaften hergestellt werden, der mit Bezug auf die Rückengestaltung keinerlei Chemikalien mehr enthält, wodurch auch ein Recyceln kein Problem mehr ist.

Als Nonwoven für die Stabilisation der Florfasern sollte man ein Krempelvlies nehmen, das unverfestigt, ggf. aber auch leicht vorverfestigt, was durch eine Wasservernadelung erfolgen kann, flächendeckend auf den Rücken des Primärträgers gelegt wird. Als Fasern kommen solche aus Polyester, aber auch PP, PA oder auch andere in Betracht. Das Nonwoven kann in seiner Dicke, seinem Gewicht den jeweiligen Anforderungen angepaßt werden, es sollte vorzugsweise ein Gewicht von 100 - 200 gr/m² haben. Anschließend soll diese Bahnware unter den Balken einer Wasservernadelungsmaschine laufen, deren Wasserdruck so eingestellt ist, daß -die Fasern -des Nonwoven einmal in sich verflochten werden, also das Vlies oder Komposit eine höhere Festigkeit erhält, aber gleichzeitig dessen Fasern in die im Rücken der Bahnware umgebogenen Florfasern und in den Primärträger dringt, so daß die florige Bahnware eine Stabilisation erhält, ohne daß der Flor in irgendeiner Weise verändert wird. Der Wasserdruck muß den jeweiligen Gegebenheiten angepaßt werden. Es kommen als Drücke solche bis zu 600 bar in Frage.

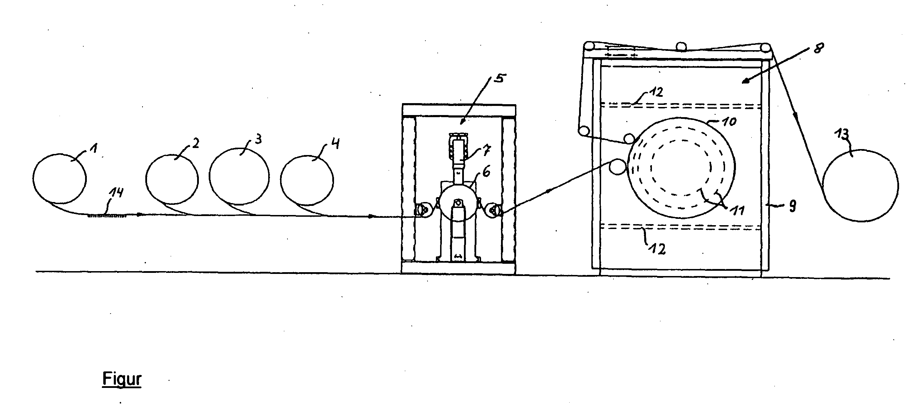

In der Zeichnung ist beispielhaft und schematisch eine Maschinenanlage dargestellt, mit der eine solche Bahnwarenrückenverfestigung durchgeführt werden kann.

Auf dem Wickel 1 ist eine bahnförmige Florware 14 so aufgewickelt, das die Sicht-, die Florseite nach unten gerichtet ist. Die Bahnware 14 kann ein Tuftingteppich eine Plüschware oder sonstige eine flauschige Oberfläche aufweisende Bahnware sein. Diese Bahnware 14 läuft kontinuierlich einer Wasservernadelungsmaschine 5 zu, die hier aus nur einer Trommel 6 besteht, der nur ein Wasserbalken 7 oberhalb der Trommel zugeordnet ist. Die Bahnware liegt somit mit -dem Flor auf der Trommel 6 auf. Bevor die Bahnware in die hydrodynamische Verfestigungseinrichtung 5 läuft, wird deren Rückenseite mit einem Vlies bedeckt. Dieses Vlies ist auf dem oberhalb der vorlaufenden Florware angeordneten Wickel 2 vorgelegt und rollt in der Geschwindigkeit der Florware gleichbleibend ab. Mittels der harten Wassernadeln wird dann in der Einrichtung 5 sowohl das Vlies verfestigt, als auch dessen Fasern in den Rücken und damit auch in die dort umgelenkten Florfasern der Bahnware bewegt. Die Florfasern sind damit in dem Primärträger fest gehalten, ohne daß diese mit einem Latexvorstrich im Rücken fixiert werden müssen. Die Wasservernadelungsmaschine 5 kann auch aus mehreren Trommeln 6 oder einem Endlosband bestehen, auf das von oben mehrere Wasserbalken 7 gerichtet sind. Abschließend ist der Teppich od. dgl zu trocknen, was in diesem Beispiel mit einem durchlüftenden Siebtrommeltrockner 8 erfolgen kann, da ja die Bahnware noch luftdurchlässig ist. Der Siebtrommeltrockner 8 besteht wie bekannt aus einer in einem Gehäuse 9 drehbar gelagerten Trommel 10, der stirnseitig ein Ventilator 11 zugeordnet ist, der die Behandlungsluft über die Staudecken 12 im Kreislauf umwälzt. Auf den Wickel 13 wird abschließend der fertige Teppich aufgewickelt.

Die aufzubringende Teppichrückenschicht kann ein einfaches leichtes Krempelvlies von dem Wickel 2 oder auch aus einem Komposit bestehen, das aus zwei oder drei stabilisierenden bahnförmigen Waren besteht. Dazu sind in der Zeichnung die Wickelrollen 3 und 4 dargestellt, die ebenfalls oberhalb der Florware 14 neben dem Wickel 2 angeordnet sind. Von dem Wickel 3 kann eine formstabile Bahnware aus einem grobgeflochtenen Gewebe od. dgl. ablaufen und von dem Wickel 4 erneut ein leichtes Krempelvlies. Alles zusammen läuft als die neue Rückenschicht mit der Florware 14 in die Einrichtung 5 und wird dort in einem Arbeitsgang fest mit dem Rücken der Florware vernadelt. Eine auf diese Weise ergänzte Ware ist formstabil, hat einen weichen Rücken, hat einen fest im Rücken verankerten Flor, der in seinem Erscheinungsbild durch diesen Verfestigungsvorgang nicht verändert ist.

## Patentansprüche

1. Verfahren zur kontinuierlichen Stabilisation einer bahnförmigen Florware mit einer Sichtseite, die in ihrer Struktur und Qualität nicht verändert werden darf, und mit einer Rückseite, die zunächst noch instabil ist, bei der also die florbildenden Fasern im Rücken noch verankert werden müssen, indem in einen Primärträger die Florfasern befestigt werden und dann zur Verankerung der im Primärträger nur lose gehaltenen Florfasern der Rücken der Bahnware mit einer die Florfasern sichernden Rückenschicht versehen wird, **dadurch gekennzeichnet, dass** an der Rückseite des die Florfasern haltenden Primärträgers ein Nonwoven mittels hydrodynamischer Wasservernadelung befestigt wird.

2. Verfahren nach Anspruch 1, **dadurch gekennzeichnet, dass** als Primärträger ein Spinnvlies aus Polyesterfasern, ein Gewebe oder ein Gewirke verwendet wird.

3. Verfahren nach Anspruch 1 oder 2, **dadurch gekennzeichnet, dass** die Florfasern in den Primärträger getuftet werden.

4. Verfahren nach einem der Ansprüche 1 bis 3, **dadurch gekennzeichnet, dass** als Nonwoven für die Rückenstabilisation der Bahnware ein Krempelvlies verwendet wird.

5. Verfahren nach einem der vorhergehenden Ansprüche, **dadurch gekennzeichnet, dass** als Nonwoven ein leichtes, etwa 100 - 200 g/m² schweres, unverfestigtes oder nur leicht vorverfestigtes Faservlies verwendet wird.

6. Verfahren nach einem der vorhergehenden Ansprüche, **dadurch gekennzeichnet, dass** zunächst ein Komposit aus einem leichten Nonwoven und einem grobgeflochteten, formstabilen Stabilitätsflächenelement oder ein Komposit aus einem leichten Nonwoven und einem grobgeflochteten, formstabilen Stabilitätsflächenelement und wiederum einem leichten Nonwoven zusammengelegt und auf den mit Bezug auf die Florfasern noch unverfestigten Rücken der Bahnware verlagert und dann mit dem Rücken zur Stabilisation der Florfasern und gleichzeitig zur Gestaltung der Rückseite mittels der hydrodynamischen Wasservernadelung in einem Arbeitsgang verbunden wird.

7. Vorrichtung zur Durchführung des Verfahrens nach einem der vorhergehenden Ansprüche mit einer Maschine, die den Flor einer Bahnware (14) erzeugt, und einer zur weiteren Behandlung nachfolgenden Einrichtung (5, 8) zum Aufbringen einer den Flor stabilisierenden Rückenschicht (2 - 4), **dadurch gekennzeichnet, dass** die Einrichtung aus einem ein Nonwoven zuführenden Aggregat (2, 3, 4), einer Wasservernadelungsmaschine (5) und einem Trockner besteht.

8. Vorrichtung nach Anspruch 7, **dadurch gekennzeichnet, dass** der Trockner als Siebtrommeltrockner (8) ausgebildet ist.

## Claims

1. Process for continuous stabilization of a width of pile fabric having a right side, which must not be changed in structure and quality, and a reverse side, which initially is unstable so that the pile-forming fibers have to be anchored in the back by fastening the pile fibers in a primary carrier fabric and then adding a back layer retaining the pile fibers to the reverse side of the fabric width for anchoring the pile fibers only loosely held in the primary carrier fabric, **characterized in that** a nonwoven is attached by hydrodynamic needling to the reverse side of the primary carrier fabric retaining the pile fibers.

2. Process in conformity with claim 1, **characterized in that** a spunbond made of polyester fibers, a woven fabric or a knit fabric is used as primary carrier fabric.

3. Process in conformity with claims 1 or 2, **characterized in that** the pile fibers are tufted into the primary carrier fabric.

4. Process in conformity with any of claims 1 to 3, **characterized in that** a carded web is used as nonwoven for back stabilization of the fabric width.

5. Process in conformity with any of the preceding claims, **characterized in that** a light-weight unbonded or only slightly bonded fiber web of some 100-200 g/m² is used as nonwoven.

6. Process in conformity with any of the preceding claims, **characterized in that**, first, a composite made of a light-weight nonwoven and a coarsely woven dimensionally stable stability fabric, or a composite made of a light-weight nonwoven and a coarsely woven dimensionally stable stability fabric and another light-weight nonwoven is formed and placed on the back of the fabric width still unbonded with respect to the pile fibers and then is joined with the back in one operation cycle by means of hydrodynamic needling for stabilization of the pile fibers and, at the same time, for structuring the reverse side.

7. Device for implementing a process in conformity with any of the preceding claims, with a machine forming the pile of a fabric width (14) and a subsequent device (5, 8) for further processing by application of a back layer (2-4) stabilizing the pile, **characterized in that** the device consists of a unit (2, 3, 4) feeding in a nonwoven, a hydroentanglement machine (5) and a dryer.

8. Device in conformity with claim 7, **characterized in that** the dryer is designed as perforated drum dryer (8).

## Revendications

1. Procédé pour la stabilisation en continu d'une largeur de tissu à poils ayant un côté de devant, dont la structure et la qualité ne doivent pas être changées, et un envers, qui initialement est instable de sorte que les fibres formant le poil doivent être ancrées dans l'envers en fixant les fibres de poil dans un tissu de support premier, puis en ajoutant une couche d'envers détenant les fibres de poil sur l'envers de la largeur de tissu pour ancrer les fibres de poil seulement légèrement attachées dans le tissu de support premier, **caractérisé en ce qu'**un non-tissé est attaché par enchevêtrement hydrodynamique à l'envers du tissu de support premier retenant les fibres de poil.

2. Procédé en conformité avec la revendication 1, **caractérisé en ce qu'**un non-tissé spunbond fait de fibres de polyester, un tissu ou un tricot est utilisé comme tissu de support premier.

3. Procédé en conformité avec les revendications 1 ou 2, **caractérisé en ce que** les fibres de poil sont tuftées dans le tissu de support premier.

4. Procédé en conformité avec l'une des revendications 1 à 3, **caractérisé en ce qu'**un voile de carde est utilisé comme non-tissé pour la stabilisation de l'envers de la largeur de tissu.

5. Procédé en conformité avec l'une des précédentes revendications, **caractérisé en ce qu'**un voile de fibres léger non lié ou seulement légèrement lié d'un poids de 100 à 200 g/m² environ est utilisé comme non-tissé.

6. Procédé en conformité avec l'une des revendications précédentes, **caractérisé en ce qu'**initialement un composite constitué d'un non-tissé léger et d'un tissu de stabilité grossièrement tissé de dimensions stables, ou un composite constitué d'un non-tissé léger et d'un tissu de stabilité grossièrement tissé de dimensions stables et d'un autre non-tissé léger est formé et placé sur l'envers de la largeur de tissu non lié encore en ce qui concerne les fibres de poil et ensuite est joint à l'envers en un seul passage par l'enchevêtrement hydrodynamique pour la stabilisation des fibres de poil et, en même temps, pour structurer l'envers.

7. Dispositif de mise en oeuvre du procédé en conformité avec l'une des revendications précédentes, avec une machine formant le poil d'une largeur de tissu (14) et un appareil (5, 8) subséquent pour le traitement ultérieur qui consiste en l'application d'une couche d'envers (2 à 4) stabilisant le poil, **caractérisé en ce que** l'appareil se compose d'une unité (2, 3, 4) alimentant un non-tissé, d'une machine d'hydroliage (5) et d'un séchoir.

8. Dispositif en conformité avec la revendication 7, **caractérisé en ce que** le séchoir est conçu comme séchoir à tambour perforé (8).
